# EUROPEAN PATENT APPLICATION

(11) **EP 4 531 365 A1**
(43) Date of publication of application: **02.04.2025**
(21) Application number: 24203362.9
(22) Date of filing: 27.09.2024
(51) Int. Cl.: H04L 45/00

(54) **NETWORK-TO-ENDPOINT COMMUNICATION FOR TOPOLOGY-AWARE MULTI-PATH TRANSPORT PROTOCOLS**

(30) Priority: 29.09.2023 US 202363586869 P
(71) Applicant: Arista Networks, Inc., Santa Clara, CA 95054 (US)
(72) Inventor: Holbrook, Hugh Weber, Santa Clara, CA, 95054 (US); Labonte, Francois, Santa Clara, CA, 95054 (US); Emmons, Thomas Benjamin, Santa Clara, CA, 95054 (US)
(74) Representative: Hoffmann Eitle

(57) **Abstract**

Systems and methods for interaction between network aware network devices and endpoints to facilitate multi-path communications in a network are disclosed. According to some embodiments, a network aware network device may provide network data associated with paths between an endpoint device and a destination on the network to the endpoint device such that the endpoint device can utilize this network data in the sending of packets to that destination, including using the network data for the determination of entropy values to include in packets in association with the implementation of a packet spraying network protocol.

## Description

### RELATED APPLICATIONS

This application claims the benefit of priority under 35 U.S.C. §119 to United States Provisional Application No. 63/586,869 filed September 29, 2023, entitled "Network-to-Endpoint Communication for Topology-Aware Multi-path Transport Protocols" which is hereby fully incorporated by reference herein for all purposes.

### TECHNICAL FIELD

This disclosure relates generally to computer networking. More particularly, embodiments of this disclosure relate to systems and methods for path-discovery mechanisms for use with muti-path transport protocols.

### BACKGROUND

Network devices send and receive data across a network using various transport protocols. Full use of the available bandwidth between endpoints, and providing some measure of fairness among competing traffic, are objectives of most transport protocols.

Recently, transport protocols that can make better use of high bandwidth networks have grown increasingly common. These protocols are sometimes referred to as "packet spraying" protocols based on the analogy that packets are distributed across the available paths in a manner that mimics a spray of liquid. The benefit of a packet spraying approach is that, by evenly distributing the packets from a single flow across the possible paths, the links in the network may be used in a substantially equal manner.

A challenge with packet-spraying protocols is in the implementation details regarding routing decisions for packets. In some cases, a sender (or sending transport protocol implementation) is given some control over the packet spraying. Much of this control may be at least somewhat dependent on the network in which the packets are being routed, such as the network topology of that network.

There is therefore a desire to have a lightweight path-discovery mechanism that could enable packet-spraying protocols to access network data about a network topology and available paths between senders and receivers in order to allow more-optimized implementations of these packet spraying transport protocols.

### BRIEF DESCRIPTION OF THE DRAWINGS

The drawings accompanying and forming part of this specification are included to depict certain aspects of the disclosure. It should be noted that the features illustrated in the drawings are not necessarily drawn to scale. A more complete understanding of the disclosure and the advantages thereof may be acquired by referring to the following description, taken in conjunction with the accompanying drawings in which reference numbers indicate features.
FIGURE 1 a block diagram depicting a general architecture of a network including one embodiment of a network monitoring system.
FIGURE 2 (collectively FIGURE 2A and 2B) is a diagram depicting a network aware network device according to one embodiment.
FIGURE 3 (collectively FIGURE 3A and 3B) is a diagram depicting an endpoint network device according to one embodiment.

### DETAILED DESCRIPTION

As discussed, network devices (e.g., switches, routers, servers, network interface cards, head end systems, etc.) utilize send and receive data across a network using various transport protocols. Typically, these transport protocols are network-agnostic (i.e., they do not know about the network topology that they run over). Specifically, they are "end-to-end".

A transport protocol such as TCP or RoCE RDMA is thus designed to work well over any network and adjust its rate and transmission schedule to accommodate any link speeds or available bandwidth on the path, while simultaneously avoiding creating overly deep queues or sending more bandwidth than the path is capable of. Fully utilizing the available bandwidth between endpoints, and providing some measure of fairness among competing traffic that is using the same resources on the path (specifically links and routers/switches/devices), is a key goal of a typical transport protocol.

There is currently an interest in transport protocols that can make better use of high bandwidth networks by sending traffic across multiple paths in the network. For example, one application might send traffic from a client to a server across a leaf-spine network by sending the traffic across all of or many of the available paths from client to server in that topology. These protocols are sometimes classified as "packet spraying" protocols, referring to the analogy that packets of a single session are sprayed (like from a hose) across the available paths.

As will be understood a flow in a network may be defined by a set of (e.g., values for) characteristics that may be associated with a packet in the network (e.g., a source IP, destination IP, source port, destination port, etc.). Packets associated with a definition for a flow (e.g., a tuple defining values for a set of characteristics that may be determined for a packet) can thus be deemed to be associated with that flow. Thus, in some cases, a flow may define a single stream (e.g., to a destination) from the point of view of an application originating that traffic.

The benefit of a packet spraying approach is that, by evenly distributing the packets from a single flow across all of (or many of) the possible paths, then even in a network without many flows all of the links in the network are equally used. In a network where the individual flows are relatively fast compared to the switch-to-switch links, a packet spraying protocol can achieve high utilization without triggering network congestion on any specific path.

By contrast, many commonly deployed transport protocols like Transmission Control Protocol (TCP), Stream Control Transmission Protocol (SCTP), Real-time Transport Protocol (RTP), and RDMA over Converged Ethernet (RoCE) are designed with an assumption that all packets follow just a single path through the network. But, for high-speed applications, an individual flow can consume all of, or a large fraction of a link's capacity. And in those networks where single-path transport protocols are used, some link is likely to be fully utilized before the (e.g., entire bandwidth of the) network is fully utilized.

A challenge with packet-spraying protocols is thus in the implementation details. One approach is to make a routing decision on every packet at each (or some) network device in the path. In this approach, a network device receiving a packet that is eligible for packet spraying performs a routing lookup (e.g., in the case of a network router) to determine all available paths to the destination address, and then chooses one of those available paths based on random selection or round-robin load-balancing. This decision may be weighted based on different bandwidths or costs associated with the paths. This technique is well-known and understood in the art.

An approach that is advantageous is to give the sender (or the transport protocol implementation at the sender) some control over the packet spraying. In one such approach, the sender places an "entropy value" into each packet. The entropy value can be a flow label, source User Datagram Protocol (UDP) port, or carried in an additional transport, or application, layer header. This entropy value is used by each packet-spraying switch on the path to the destination as a "seed" for choosing one of the available paths, as determined by the routing lookup. This gives the sending transport protocol implementation some control over the number of paths used, allows it to maintain information per entropy value about losses and congestion, and avoids the need for maintaining packet-spraying state in the network devices.

In this approach, all packets of a single entropy value follow the same path through the network. By associating state with each such path, the transport protocol implementation at a receiver can perform congestion-aware or load-adaptive routing and traffic balancing among the entropy values (and hence the paths). In such a scheme, maintaining a large number of entropy values and recording which ones are used is potentially expensive and it is desirable to use fewer (but not too few) entropy values. In a 2-level Clos topology, generally the ideal number of entropy values would correspond to the number of available equal-cost paths, with each entropy value corresponding to a different path. However, transport protocol endpoints generally do not have any idea how many paths there are to any destination.

When the number of entropy values corresponds directly to (as opposed to approximately to) the number of actual paths to reach the destination, the network load balancing can be even more evenly distributed. For example, if there are 15 equal-cost paths to a destination, it is preferable for the endpoint to use 15 entropy values and to map traffic evenly across them, and for the network device(s) along the route (or in the network) to map these 15 entropy values to the 15 available paths. If, in this case, 16 entropy values are used instead, then one path necessarily will carry traffic associated with two entropy values and this places an additional burden on the endpoint's transport protocol to appropriately, and evenly, balance the traffic across these 16 entropy values.

It may also be possible to run a full routing protocol stack at senders (e.g., a protocol stack that implements routing in addition to a transport protocol) in which case it may be possible to communicate the number of paths to each destination, but typically network operators do not wish to burden endpoints in the network with the overhead or management and configuration complexity, or security risks, associated with running a full network protocol implementation on the transport endpoints. Moreover, an endpoint only needs to be aware of information for the hosts with which it is communicating, not all possible hosts in the network. Typical routing protocols are not well-suited to efficiently provide this granularity of information to endpoint devices. Moreover this information is not generally provided to the transport protocol such that it can use that information to determine the entropy value in any packet of a flow.

There is therefore a desire to have a lightweight path-discovery mechanism that could enable packet-spraying protocols to access network data about the network topology and available paths between sender and receiver in order to allow more-optimized implementations of packet spraying transport protocols (e.g., that attempt to minimize, or maximize, resource usage as is appropriate) For example, it may be desirable to communicate the number of available paths, the number of desired entropy values, a number of network hops between a sender and receiver, or other network data, to a sender or receiver in the network such that this information can, for example, be used in the selection of an entropy value to include in one or more packets, or whether to include an entropy value in such packets at all. Likewise, it is desirable to communicate this information to endpoints only with respect to network destinations which with that particular endpoint is actively communicating.

To address these needs, among others, attention is directed to systems and methods for interaction between network aware network devices and endpoints to facilitate multi-path communications in a network. Specifically, embodiments may comprise network devices that are network aware. These network aware network devices may be network devices that store, or can obtain, network data on the topology of the network in which it operates, including paths through the network to endpoints in the network, devices coupled to that network device, hops between network devices in the network, or other network data pertaining to the network. Such network data can, for example, be determined and maintained as the network aware network device participates in the routing of packets within the network (e.g., using a routing protocol).

A muti-path agent may be provided on such network aware network devices. The multi-path agent provides an interface for obtaining network data associated with destinations on the network. Such a multi-path agent may reside, for example, at the network layer at the network aware network device or endpoint device.

In particular, the multi-path network agent at a network aware network device may receive a request from an endpoint network device (e.g., a sending network device in the network) wherein the request specifies a destination associated with another network device (e.g., a destination network device with which the sending endpoint network device wishes to, or is, communicating). The specified destination may thus be an individual destination (e.g., a single IP address) or a group of destinations (e.g., a subnet such as an IP address and prefix or the like) associated with the destination network device.

When the multi-path agent at the network aware network device receives this request it may determine a number of paths (e.g., one or more next hops) associated with the destination (e.g., and the requesting endpoint device) and provide (e.g., return) network data comprising the number of paths or an associated number of entropy values to the requesting endpoint network device. Alternatively or additionally, the network aware device may determine entropy values themselves and paths (e.g., next hops) associated with these entropy values (e.g., entropy values that will take a given path) and provide network data comprising these entropy values or paths to the requesting endpoint device.

The multi-path agent at the network aware network device may also provide such network data (e.g., number of paths or an associated number of entropy values) to an endpoint device without receiving a request for such network data from that endpoint device. In such cases, for example, the network aware network device may determine that a destination is associated with an endpoint based on network data determined and maintained at the network aware network device including network data determined on that network aware network device based on that network device's participation in routing of packets in the network (e.g., analysis of network traffic such as packet inspection or the like). Thus, when a determination is made at the network aware network device that an endpoint is associated with a destination, the network device may determine network data such as a number of paths associated with the determined destination, an associated number of entropy values, entropy values themselves, paths associated with entropy values or other network data associated with the endpoint (e.g., and destination) and provide that network data to the endpoint device.

It will be noted that a request from an endpoint device for network data may specify one destination (or that one or more destinations associated with the endpoint may be determined) and the muti-path agent at the network aware network device may determine a different destination associated with the specified (or determined) destination to provide to the requesting endpoint device (e.g., in response to the request). For example, a single destination endpoint network device may be specified in the request (e.g., a single IP address) and the network aware network device may determine a destination group (e.g., a subnet) associated with the single destination (e.g., a subnet prefix such as 10.1.1.0/24) for which the same paths (e.g. next hops) should apply, and return this destination group along with associated network data (e.g., number of paths, number or type of entropy values, entropy values themselves, etc.) in the response to the requesting endpoint network device.

Additional network data may also be determined at the network aware network device and returned to the requesting endpoint device in the response to the request, including for example, network data on what type of data to utilize as an entropy value. In one embodiment, for example, this network data may include a load balancing selector value that an endpoint device may include as a value of a field in a packet header that one or more network devices in the network may use to select a (e.g., different load balancing algorithm). These (e.g., different) load balancing algorithms employed at the network devices in the network may be selected to, for example, balance traffic according to one or more entropy values as included in that packet by an endpoint device according to the determined network data.

The multi-path agent (e.g., at the network aware network device) also registers the requesting endpoint network device and destination pair at the network aware network device (e.g., including any determined destination, such as a subnet, returned to the requesting endpoint network device), along with the number of entropy values specified in the response (or the number of paths, type of entropy values, entropy values, next hops associated with entropy values, etc., determined and returned).

This (sending) endpoint network device, destination, and number of entropy values (or paths) combination may be stored, for example, as an entry in a database, table, or other structure (collectively referred to as multi-path table for ease of reference herein without loss of generality) maintained by the multi-path agent at the network aware network device. Any other network data provided to the requesting endpoint network device in association with that destination may also be stored in the corresponding entry, such as an identifier for a type of entropy value to utilize, entropy values, next hops associated with entropy values, etc., that were provided to the requesting endpoint network device. In this manner, embodiments may provide a mechanism for a network aware network device (e.g., switch or router) to leam of an endpoint that may perform packet spraying and for the network aware network device to efficiently communicate to the endpoint network device a number of possible entropy values (or paths) that may be used with a particular destination.

In one embodiment, when such a request is received at the network aware network device (or the network device otherwise makes a determination that a destination is associated with an endpoint), the network aware network device may determine that the specified destination is attached to the same network aware network device as the requesting endpoint device (or that there is only a single path from the requesting endpoint device to the destination endpoint network device). In such instances, the response to the request received from the endpoint device (or notification from the network aware network device to the endpoint device) may indicate that the (e.g., requesting) endpoint network device is connected to the same network aware network device as the destination endpoint network device (e.g., that only a single path exists or a single entropy value is to be used). In this way, a different congestion control algorithm or internal state representation may be utilized (e.g., by the sending network device endpoint) based on having data indicating that the destination endpoint network device is directly connected (e.g., to the same network aware network device).

Endpoint devices in the network may also have a corresponding multi-path endpoint agent that may reside (e.g., at the network layer) at the endpoint device. Such a multi-path endpoint agent may be adapted to request network data from network aware network devices (using the interface provided by the multi-path agent at the network aware network device) when (or prior to) sending packets to destinations in the network. The multi-path endpoint agent can then store returned (or included in a notification) destination and number of entropy values (or number of paths returned) along with any other returned network data in a multi-path table at the endpoint network device.

Accordingly, the multi-path endpoint agent at the endpoint device may determine (e.g., when sending a packet to a specific destination or group of destinations such as a subnet) if a muti-path table at the endpoint device includes an entry associated with the destination for the packet. If there is no entry in the muti-path table associated with the destination endpoint network device, the multi-path endpoint agent at the sending endpoint network device may request network data from a network aware network device, where the request specifies the destination endpoint network device (e.g., associated with the packet to be sent).

When the network data, including the number of paths or number of entropy values to utilize with the destination is returned to the sending endpoint network device, the multi-path endpoint agent may store the destination (e.g., as specified in the request or as returned in a response if the destination is different) in the muti-path table at the sending endpoint network device along with the specified number of paths or entropy values returned and any other returned network data (e.g., type of entropy value to utilize, entropy values, next hops associated with entropy values, etc.) in the muti-path table at the endpoint network device. Accordingly, when sending a packet to that destination, the number of paths or entropy values to use for that destination may be determined from the muti-path table at the endpoint device (along with any other network data such as type of entropy value to use, etc.) and a suitable entropy value to include in the packet may be determined for inclusion in the packet to be sent to the destination. It will be noted that a sending endpoint device may include multiple entropy values in the packet, where those multiple entropy values may be included in different fields of a packet or associated with (e.g., different) layers of the network such that load balancing, etc. may be accomplished with respect to those different layers using a respective associated value for a field. For example, these (e.g., network) layers may correspond to an in-server switching layer, a top-of-rack switching layer, a leaf switch layer, a spine layer or another layer.

It will be noted as well that a number of paths at a first layer for at least one of the entropy values at that first layer may be different from the number of paths at another layer for a different entropy value at the first layer. To illustrate numerically, suppose 16 entropy values are used in association with a first layer. Here, when the first 15 entropy values are used at the first layer there may be four values used at the second layer. When the 16th value is used, however, there may only be three entropy values at a second layer of the network. Other scenarios are imaginable and are fully contemplated herein.

In this manner, embodiments may provide a mechanism for the selection of a specific outgoing path or link (e.g., next hop) among a set of possible paths or links for a destination, where the selection is based on some function of fields in a packet and where those fields and the mapping to a path or link is determined in part by the network data communicated between the network aware network device and a sending endpoint network device.

In some embodiments, when requesting network data from network aware network devices (using the interface provided by the multi-path agent at the network aware network device), an endpoint network device may indicate that the endpoint network device should be updated based on changes to paths or use of entropy values with respect to the destination specified in the request. Such an indication may also be inferred or otherwise automatically determined by the multi-path agent on the network aware network device based on the reception of a request for a destination from the endpoint network device or analysis of network traffic in the network. In these types of embodiments, the multi-path agent at the network aware network device may notify that endpoint network device based on changes to the paths to a destination (e.g., when a path has gone down, experiences excessive congestion, etc.).

Specifically, according to one embodiment, a network aware network device may maintain or determine path data associated with paths through the network in which it resides. This path data may include, for example, reachability data regarding the paths to different destinations such as link down or link up events. If a path to a particular destination (e.g., a single destination or group destination) has changed (e.g., the path has down, is determined to be overly congested, etc.) the multi-path agent at the network aware network device can access the muti-path table to determine if there are any entries in the muti-path table at the network aware network device associated with that destination.

For each entry in the muti-path table associated with the destination, the multi-path agent at the network aware network device can determine the associated sending endpoint network device. Based on the reachability data associated with that destination (e.g., that one or more paths to that destination endpoint device are no longer up, or are congested, etc.), multi-path agent at the network aware network device can determine (updated) network data including an updated number of paths or entropy values associated with that destination for that sending endpoint network device.

Multi-path agent can then send a notification specifying that destination and the determined updated network data (e.g., updated number of paths or associated number of entropy values or an identification of paths or entropy values that are no-longer valid, entropy values or paths that are still valid, or paths or entropy values that are different or additional and are to be utilized) to the endpoint multi-path agent at that sending endpoint network device. When the multi-path agent at the sending endpoint network device receives such a notification it may update the muti-path table maintained at the sending endpoint network device with the updated number of paths or number of entropy values. As such, when a subsequent packet is sent from that endpoint network device to that destination, the updated number of paths or entropy values may be determined from the updated muti-path table at the endpoint device and a suitable entropy value to include in the packet may be determined for inclusion in the packet to be sent to the destination. Accordingly, the number of entropy values placed into a packet may be dynamically adjusted based on data received from network aware network devices based on dynamically determined and updated path data in the network.

Embodiments as disclosed may thus provide a number of advantages. Importantly, while network aware network devices may be aware of various paths within a network to a large number of destinations with the network, those network aware network devices may efficiently communicate this network data to endpoints only with respect to network destinations which with those particular endpoint desires to communicate with (or is actively communicating with). Thus, the need to process or store network data regarding other endpoints or paths in the network may be avoided. As this network data may include a number of possible entropy values (or paths) that may be used with a particular destination, and that network data dynamically updated based on network operating conditions, congestion control algorithms may be individually implemented with respect to such destinations.

Accordingly, embodiments may be widely applied to implement efficient packet-spraying protocols in a variety of settings. For example, packet spraying and the associated embodiments as may be usefully applied in applications such as Artificial Intelligence (Al) training and inference where an individual transport-layer session can periodically and repeatably generate enough traffic to completely consume all of or a significant portion of any single path from a source to a destination.

To illustrate in more detail, in 2024 a Graphics Processing Unit (GPU) based server participating in an Al training application can generate messages of up to a gigabyte in size and transmit it at close to a wire rate of 400 gigabits per second. This rate is sufficient to saturate the link from the GPU server to the first hop switch and any of the internal switch-to-switch links that it would pass over (were the whole flow to be sent on any one path). Embodiments may help to substantially ameliorate such saturation issues.

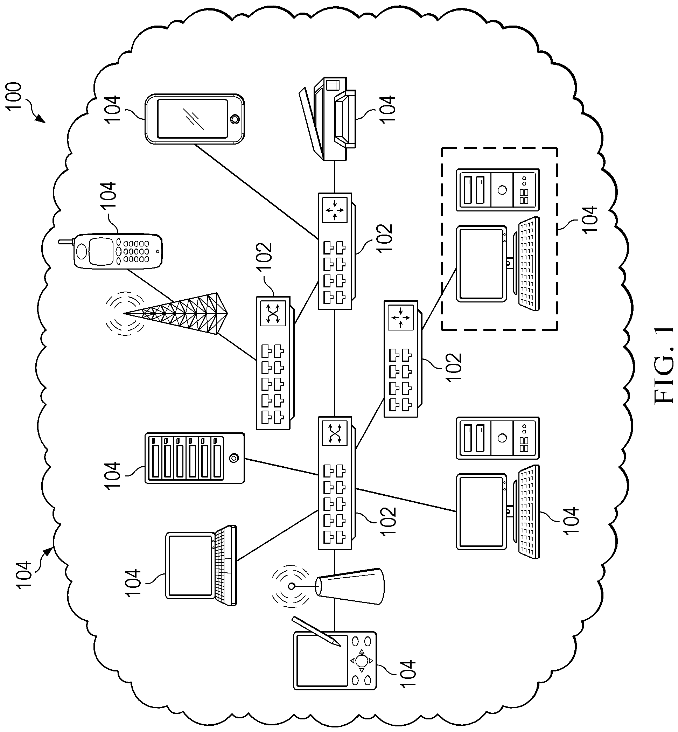

Turning then to FIGURE 1, one example of network topology is illustrated where the network topology includes embodiments of network aware devices that may provide network data related to entropy values for destinations to embodiments of endpoint devices adapted to utilize such network data to include appropriate entropy values in packets to be sent to those destinations. Specifically, network 100 includes a number of communicatively connected computing devices 102, 104 (generally referred to as network devices). These network devices 102, 104 may be connected through one or more wired or wireless communication networks such as a Local Area Network (LAN), a Wide Area Network (WAN), an internet (e.g., the Internet), an intranet, a cellular network, or almost any other type of communication network. It will be noted that network 100 may be architected according to various network topologies such as, for example, a leaf-spine topology such as a multi level or stage Clos network. It will also be noted that network 100 may include one or multiple types of communication networks and that the network devices 102, 104 on the network 100 may be connected to other networks (e.g., the Internet) through the network 100.

Network devices 102, 104 included in network 100 may thus include a number of different types of devices, including endpoint devices 104 and network aware network devices 102 comprising the infrastructure of the network 100 such as routers, switches, gateways, firewalls, etc. These network aware network devices 102 may be infrastructure network devices that store, or can obtain, network data on the topology of the network 100 in which they operate, including paths through the network to endpoints in the network, devices coupled to that network device, hops between network devices in the network, or other network data pertaining to the network. Such network data can, for example, be determined and maintained as the network aware network device 102 participates in the routing of packets within the network (e.g., using a routing protocol). Additionally or alternatively, network aware network devices 102 may implement, or access network data from, a network monitoring system that observes, determines, stores, or makes accessible network data regarding the operation of network 100 (e.g., including devices therein).

The devices 120, 104 in network 100 (e.g., applications, operating systems, drivers, etc. on these devices) may utilize certain network protocols to facilitate the rapid or reliable transfer of data between themselves. A packet spraying approach may be used in association with such network protocols, whereby traffic from a sending endpoint device in network 100 is sent (e.g., to a next hop or a destination) across network 100 by sending the traffic across all of or many of the available paths from the endpoint to the destination in the network 100.

An approach that is advantageous is to give a sender (e.g., an application or sending transport protocol implementation at an endpoint device 102) some control over this packet spraying. In one such approach, the sender places an "entropy value" into each packet to be sent. The entropy value can be a flow label, source UDP port, or carried in an additional transport layer, or application layer, header. This entropy value is used by each packet-spraying infrastructure device (e.g., switch) on the path to the destination as a "seed" for choosing one of the available paths, as determined by a routing lookup. This gives the sending transport implementation some control over the number of paths used, allows it to maintain information per entropy value about losses and congestion and avoids the need for packet-spraying state in the network devices.

Endpoint devices 102 and network aware network devices 104 in network 100 may thus cooperate to participate in a lightweight path-discovery mechanism that could enable packet-spraying protocols to access network data about the network topology and available paths between sender and receiver in order to allow more-optimized implementations of packet spraying transport protocols.

A muti-path agent may be provided on network aware network devices 104 and endpoint devices 102. Such a multi-path agent may reside, for example, at the network layer at the network aware network device or endpoint device. The multi-path agent may maintain a multi-path table comprising an association between the endpoint device (e.g., an identifier for an endpoint device, network interface, or application thereon), a destination for traffic from that endpoint device and network data associated with paths from that endpoint device to the destination, such as a number of paths or entropy values to use, identifiers of next hops, subgroups associated with the destination.

The multi-path network agent at the network aware network device 104 provides an interface for obtaining network data associated with destinations on the network. Accordingly, the multi-path endpoint agent at an endpoint device 102 may determine (e.g., when sending a packet to a specific destination or group of destinations) if the muti-path table maintained by the multi-path endpoint agent at the endpoint device 102 includes an entry associated with the destination for the packet. If there is no entry in the muti-path table associated with that destination, the multi-path endpoint agent at the sending endpoint network device 102 may request network data for that destination from a network aware network device 104 (e.g., the network aware network device 104 to which the endpoint network device is connected). The destination specified in such a request may be an individual destination (e.g., a single IP address) or a group of destinations (e.g., a subnet such as an IP address and prefix or the like) associated with the destination network device.

When multi-path network agent at the network aware network device 102 receive such a request from an endpoint network device 104 (e.g., a sending network device in the network), the multi-path network agent at the network aware network device 102 may check the muti-path table maintained by the multi-path network agent at the network aware network device 102 to determine if there is network data associated with the destination specified in the request, or a group of destinations associated with the specified destination (e.g., a subnet including the specified destination), in the muti-path table at the network aware network device 102. If such network data exists in the muti-path table at the network aware network device 102, this network data (e.g., such as a number of paths or entropy values to use, identifiers of next hops, subgroups associated with the destination, etc.) associated with the specified destination may be returned to endpoint device in response to the request.

If, however, the muti-path table at the network aware network device 102 does not include network data associated with specified destination, the muti-path network agent at the network aware network device 102 may determine network data associated with the specified destination. This network data may be determined by accessing routing data (e.g., routing tables) at the network aware network device 102, network monitoring data determined or maintained at the network aware network device 102 or other data utilized in the operation of the network aware network device 102 (e.g., in performing, routing, forwarding, network management, or other activities).

The network data thus determined by a multi-path network agent at a network aware network device 102 for a request from an endpoint device specifying a destination may include a number of paths associated with the specified destination (e.g., and the requesting endpoint device 104), a number of entropy values to use by the endpoint device 104 (e.g., when performing packet spraying with respect to the specified destination), a group or subnet associated with the specified destination (e.g., when the specified destination is an IP address), an indication that the destination is (or is not) attached to a same network infrastructure device 102 as the endpoint device, a type of entropy value to utilize, the entropy values to utilize, a path or next hop associated with each entropy value, etc. This determined network data (e.g., number of entropy values, etc.) associated with the specified destination (and the requesting endpoint) may then be provided to the requesting multi-path endpoint agent at the endpoint device 102.

The multi-path network agent at the network aware network device 102 may also register the (identifier for the) requesting endpoint network device and destination pair in the muti-path table at the network aware network device 102 along with the network data determined for the specified destination (e.g., and endpoint network device 104) that is returned to the endpoint device 104 (e.g., the number of entropy values, etc.).

When the network data (e.g., including the number of paths or number of entropy values to utilize with the destination) is provided by the muti-path network agent at the network aware network device 102 to the multi-path agent at the endpoint network device 104, the multi-path endpoint agent 104 may create or update (collectively register) an entry in the multi-path table at the endpoint network device 104 associated with the destination (e.g., as specified in the request or as returned in a response if the destination is different). The registered entry in the muti-path table at the endpoint network device 104 may include the network data as provided by the by the muti-path network agent at the network aware network device 102 (e.g., may include specified number of paths or entropy values returned and any other returned network data).

Accordingly, when a (e.g., subsequent) sending of a packet to that destination occurs, the multi-path endpoint agent at the endpoint device 102 may determine the network data associated with that destination from the multi-path table at the endpoint device 104 and determine a number of paths or entropy values to use for that destination and a suitable entropy value to include in the packet may be determined for inclusion in the packet based on such network data. Specifically, the number of entropy values (or actual entropy values to utilize) as determined from the muti-path table may be provided to a transport protocol at the endpoint device such that the transport protocol at the endpoint device can determine an entropy value to include in the packet intended for the destination.

It may now be useful to illustrate particular embodiments of network aware network devices and endpoint devices utilizing multi-path agents. It will be noted here before describing an embodiment of such a network aware network device in more detail that while a particular embodiment of such a device is described for purposes of illustration, network aware network devices as contemplated herein may include any of device in a network that may determine, maintain or otherwise access network data on endpoints and destinations in a network (e.g., switches, routers, servers, network interface cards, head end systems, etc.) and that all such network aware network devices are contemplated herein without loss of generality.

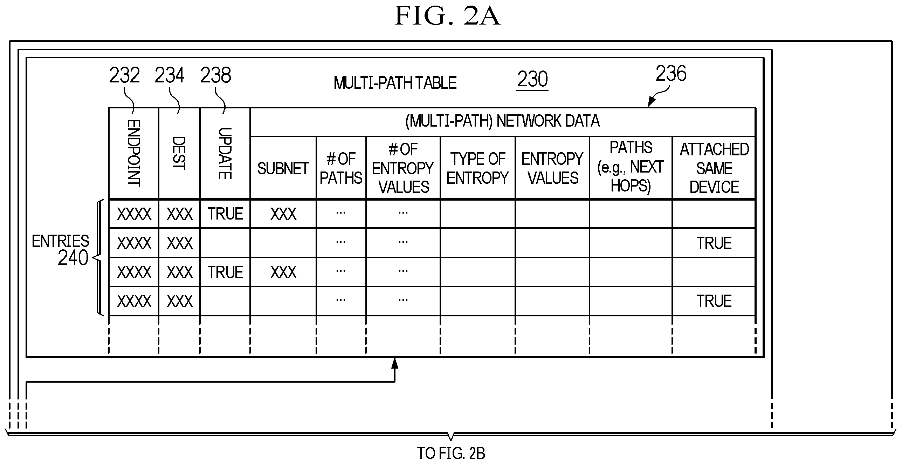

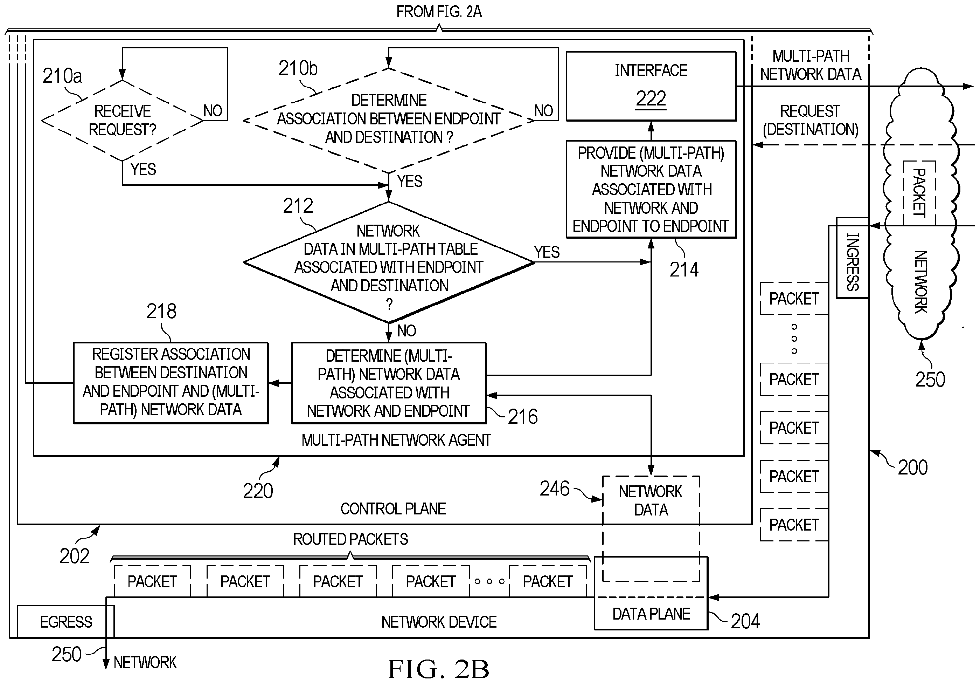

Referring then to FIGURE 2, one embodiment of a network aware network device including a muti-path agent is depicted. Here, network device 200 may include two different planes that are used to process network traffic: control plane 202 and data plane 204 (sometimes referred to as a forwarding plane). Control plane 202 may include a central processing unit (CPU) and one or more memories. Among other processes, this CPU may run an operating system or other software which may be stored in memory of the network device. Using configuration information (e.g., such as routing information stored in forwarding tables at the network device 200), the operating system software or other software may program (e.g., data in) data plane 204.

The data plane 204 receives, processes, and forwards network traffic using various configuration data (e.g., forwarding, security, quality of service (QoS), or other network traffic processing information (e.g., including that configured by the control plane 202). For example, for each received packet of network traffic, the data plane 204 determines a destination address of that packet, looks up the requisite information for that destination in one or more tables stored in the data plane 204, and forwards the packet out of a proper outgoing interface. Specifically, data plane 204 may include a packet processor utilized in the implementation of a packet processing pipeline adapted to implement one or more stages for forwarding a received packet 210 by analyzing header fields of the received packet. In operation, then, network device 200 may receive data packets from one or more endpoint devices on network 250 through ingress interfaces (e.g., ports) of network device 200 coupled to network 250. These packets may be processed by data plane 204 (e.g., including the packet processing pipeline) to forward these packets over a corresponding egress interface (e.g., port) coupled to network 250.

As such, network data 246 may be determined or maintained at network device 200. This network data 246 may include data determined, stored or maintained across in one, or both of, control plane 202 or data plane 204. Such network data 246 can, for example, be determined and maintained as the network aware network device 200 participates in the routing of packets within the network (e.g., using a routing protocol), such as various routing tables used by network device 200. This network data 246 can thus include data used by network device 200 in the implementation of packet spraying in association with various network protocols. Additionally or alternatively, network device 200 may implement (e.g., in control plane 202), or access network data from, a network monitoring system that observes, determines, stores, or makes accessible network data regarding the operation of network 250 (e.g., including devices therein).

Network device 200 also includes multi-path network agent 220 adapted to implement a lightweight path-discovery mechanism for packet-spraying protocols to access network data associated with paths between a sending endpoint and a destination and in order to allow more-optimized implementations of those packet spraying protocols. Such a multi-path network agent 220 may reside, for example, at the network layer at the network device 200 and maintain muti-path table 230. Entries 240 in muti-path table 230 may include an endpoint 232 (e.g., an identifier for an endpoint) and an associated destination 234 (e.g., an identifier for a destination) of traffic sent from that endpoint 232. Each entry 240 in muti-path table 230 may also include (multi-path) network data 236 associated with the endpoint 232 and destination 234 pair for that entry 240. This network data 236 may include one or more of a subnet associated with the destination 234, a number of paths to be used (e.g., between) for the endpoint 232 and destination 234 of that entry 240, a number of entropy values to use for packet spraying for that endpoint 232 and destination 234, a type of entropy value to be utilized for packet spraying for that endpoint 232 and destination 234, the actual (e.g., entropy) values to use for packet spraying for that endpoint 232 and destination 234, the paths (e.g., next hops) to be used for that endpoint 232 with respect to that destination 234 (where the paths may be actually associated with specific entropy values), whether the endpoint 232 and destination 234 are directly connected to the same network device, or other network data.

Embodiments of muti-path network agent 220 may thus provide an interface 222 for obtaining network data 220 associated with destinations on the network 250. Accordingly, requests (e.g., from endpoint devices on network 250) for muti-path network data may be received by the multi-path network agent 220 at network device 200 through interface 222 (STEP 210a) and an endpoint and destination determined from such a request.

Alternatively, multi-path network agent 220 at network device 200 may determine a destination and associated endpoint in the network 250 to which muti-path network data should be provided based on network data 246 determined and maintained at the network device 200 including network data 246 determined on that network device 246 based on that network device's participation in routing of packets in the network (e.g., analysis of network traffic such as packet inspection or the like) (STEP 210b). For example, muti-path network agent 220 may determine that there is traffic between an endpoint and destination, or reachability data associated with an endpoint and destination has changed.

For example, in some embodiments, a request for multi-path network data from an endpoint network device may indicate that the endpoint network device should be updated based on changes to paths (e.g., a number of paths has gone up or down), or use of entropy values with respect to the destination specified in the request. Such an indication may also be inferred or otherwise automatically determined by the multi-path network agent 220 based on the analysis of network traffic in the network (e.g., based on network data 246). In this case, a flag or other update indication 238 may be stored in entry 240 associated with the endpoint and destination in muti-path table 230.

In these types of embodiments, the multi-path network agent 220 at network device 200 may notify that endpoint network device based on changes to the paths to a destination (e.g., when a path has gone down, experiences excessive congestion, etc.). Specifically, network data 246 may include path data associated with paths through network 250. This path data may include, for example, reachability data regarding the paths to different destinations such as link down or link up events. If a path to a particular destination (e.g., a single destination or group of destinations such as a subnet) has changed (e.g., the path has down, is determined to be overly congested, etc.) the multi-path network agent 220 at network device 200 can access the muti-path table 230 to determine if there are any entries 240 in the muti-path table 230 associated with that destination (e.g., that have an update indicator 238).

For each entry in the muti-path table associated with the destination (e.g., that have an update indicator 238) the multi-path network agent 220 can determine the associated sending endpoint network device. Based on the reachability data associated with that destination (e.g., that one or more paths to that destination endpoint device are no longer up, or are congested, etc.), multi-path network agent 220 can determine (updated) network data including an updated number of paths or entropy values associated with that destination for that sending endpoint network device and update the (multi-path) network data 236 associated with that entry 240.

Thus, based on the reception of such a request, a determination that there is traffic between an endpoint and destination, or reachability data associated with an endpoint and destination has changed (STEPS 210a or 210b), multi-path agent 220 may determine if there is an entry 240 in multi-path table 230 associated with the endpoint and destination (e.g., the determined endpoint and destination from the request or determined from network data 246 at the network device 200) (STEP 212). Determining if such an entry 240 exists may include, for example determining if an entry 240 in muti-path table 200 includes the endpoint 232 and destination 234, or if any entry 240 is associated with the endpoint and a group of destinations (e.g., a subnet) associated with the (determined or received) destination, etc.

If an entry 240 associated with the determined endpoint and destination exists in the muti-path table 230 (Y Branch of STEP 212), the network data 236 (or a subset thereof) included in this entry 240 (e.g., such as a number of paths or entropy values to use, a particular protocol for which that number of paths or entropy values are to be utilized, the actual entropy values to utilize, identifiers of next hops, subgroups associated with the destination, etc.) associated with that determined destination and endpoint may be provided to the endpoint device (in response to a request or a determination the endpoint device should be notified or updated) (STEP 214).

If, however, the muti-path table 230 does not include an entry 240 associated with the determined destination and endpoint (N Branch of STEP 212), the muti-path network agent 220 may determine muti-path network data 236 associated with the determined destination and endpoint (STEP 216). This muti-path network data 236 may be determined by accessing network data 246 (e.g., routing tables) or other data utilized in the operation of the network device 200 (e.g., in performing, routing, forwarding, network management, or other activities).

The multi-path network data thus determined by multi-path network agent 220 for a determined destination and endpoint may include a number of paths associated with a determined destination and endpoint, a number of entropy values to use by the endpoint device (e.g., when performing packet spraying with respect to the specified destination), one or more actual entropy values to utilize, one or more particular protocols for which the entropy values (or number of entropy values) are to be utilized, a group or subnet associated with the specified destination (e.g., when the specified destination is an IP address), an indication that the destination is (or is not) attached to a same network infrastructure device as the endpoint device, a type of entropy value to utilize, a path or next hop associated with each entropy value, etc. Additionally, in cases where reachability data associated with an endpoint and destination has changed (e.g., a number of paths has changed, or a number or actual values of entropy values to use has changed) the determined network data may include a notification regarding the change in such reachability data, including, for example, a notification that the number of paths has changed, a specification of a path or entropy value that is no longer to be utilized, or an update to a number or range or entropy values or paths, including entropy values or paths that should be added or removed from a set of paths or entropy values to be used by an endpoint.

It will be noted that the number of paths associated with the destination and endpoint may take into account, or reflect, a number of (e.g., local) next hops, such as for endpoint (e.g., relative to the destination) in the network, or the number of paths (e.g., for the endpoint relative to the destination) across the entire network.. For example, in a simple two tier network, the number of local next hops and entire paths may be the same, but if there is additional Equal-Cost Multi-Path Routing (ECMP) along a path (e.g., in a three tier network) then these may not be the same.

In one embodiment, when such a request is received at multi-path network agent 220 device (or multi-path network agent 220 otherwise makes a determination that an endpoint should be notified with respect to destination), the multi-path network agent 220 may determine that the destination is attached to a same network device as the endpoint device (or that there is only a single path from the endpoint device to the destination). In such instances, the determined (multi-path) network data 236 may indicate that the endpoint network device is connected to the same network device as the destination (e.g., that only a single path exists or a single entropy value is to be used).

As discussed, in some embodiments, the (e.g., actual) entropy values to utilize may be determined when determining this network data. These entropy values can be determined, for example, by providing the endpoint or destination (or path or route) to a transport protocol to allow the transport protocol to determine such entropy values. These actual entropy values may be determined as an explicit list of one or more values for each of (or all) the number of entropy values, or a range of values from which entropy values may be selected. The actual entropy values (or the number of entropy values to utilize) may, in some cases, be selected based on a forwarding algorithm associated with (e.g., utilized or otherwise known by) network device 200 or other entities in the network (e.g., in one or more network layers of the network). In this manner, embodiments may take into account the forwarding algorithm that network devices, endpoint devices, or other devices in the network, are using at one or more layers of the network when determining the entropy values (or number of entropy values) to send to an endpoint.

As but one example, an entropy value determined for an endpoint may include two or more sub-fields within that entropy value. Such an entropy value, may for example, be a set of bits including two or more bit-fields. Each of the sub-fields of the entropy value (e.g., the bit-fields) may be associated with a forwarding decision made at a (e.g., different) network device or (e.g, different) layer. For instance, a first sub-field (e.g., set of bits of) the entropy value may be associated with a first forwarding decision at a first network device (e.g, on a path between the endpoint and the destination) while a second sub-field (e.g, set of bits of) the entropy value may be associated with a second forwarding decision at a second network device on a path.

Thus, in these types of entropy values, each sub-field of the entropy value may correspond to a number of determinations (e.g, forwarding decisions or choices) at a (e.g, different) layer of the network or at different network devices. To illustrate in more detail, these entropy values (or the sub-fields, or portions of the sub-fields of the entropy value) may be stacked, such that one sub-field (or portion of a sub-field such as a portion of a set of bits) may be used (e.g., in a forwarding decision) by, or otherwise associated with, a first network hop while another subfield (or or other portion of a sub-field, such as another portion of a set of bits) may be used (e.g., in a forwarding decision) by, or otherwise associated with, a second network hop

The determined (multi-path) network data, or portion of that network data, (e.g., number of entropy values, etc.) associated with the determined endpoint and (e.g., specified) destination may then be provided to the endpoint device. (STEP 214). Thus, the (multi-path) network data provided to the endpoint device may include a number of entropy values to use, a type of entropy value to use, the entropy values and a specification of a path (e.g., next hop) for each of the entropy values, a type of entropy value to use, an indication the endpoint and the destination are directly connected to the same network device, a group of destinations (e.g., a subnet) to be associated with the network data provided, or other network data.

As mentioned above, a number of entropy values or actual entropy values (e.g., a list or range of values) may be determined as part of the determined network data. Accordingly, network data that may be determined for providing to the endpoint device may include (e.g., in addition to a number of entropy values to utilize) an algorithm for entropy value selection or determination, or the specification of an algorithm for such entropy value determination. Alternatively, an algorithm for entropy value determination may be configured in advance at both the network device and endpoint (i.e., the same algorithm). In these types of cases, the network data for an endpoint may include parameters for configuration of such a communicated, specified, or agreed upon algorithm to determine such entropy values, such as a seed value, "stride", or other input or configuration of the algorithm, such that the actual entropy values may be determined by the communicated, specified, or agreed upon, algorithm at the endpoint device. For example, the network data determined for the endpoint may describe a method for expanding one or more ranges of entropy values, for expanding one or more ranges based on a "stride" greater than one, or it may include, describe or specify, any algorithm that transforms a number in the range of the number of paths or entropy values to one or more entropy values to use, such as a CRC, hash function, or other algorithm.

When (or before or after) the determined network data associated with the endpoint and destination is provided to the endpoint device. (STEP 214), multi-path network agent 220 may also create or update (register) an entry 240 for the requesting endpoint 232 and destination 234 pair in the muti-path table 230 along with the multi-path network data 236 determined for that destination and endpoint (STEP 218). Additionally, in some embodiments, when actual entropy values are returned to the requesting endpoint 232, network device 200 may configure itself (e.g., data plane 204 at network device) such that packets including different ones of those entropy values are sent on a different path to the destination.

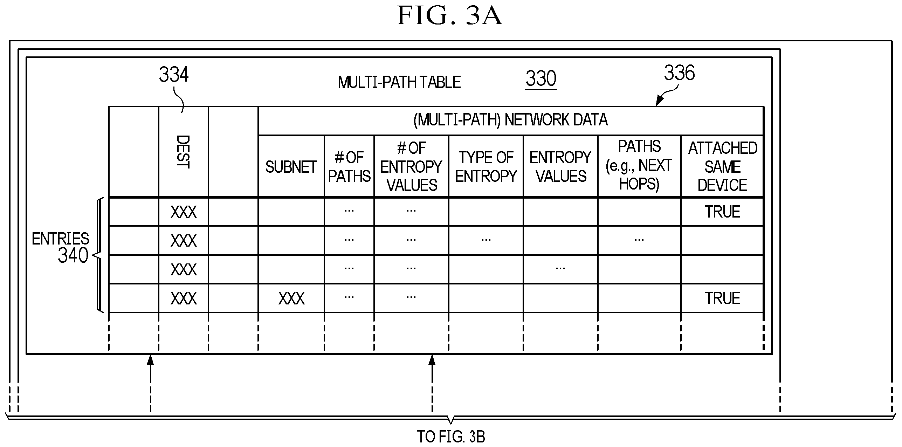

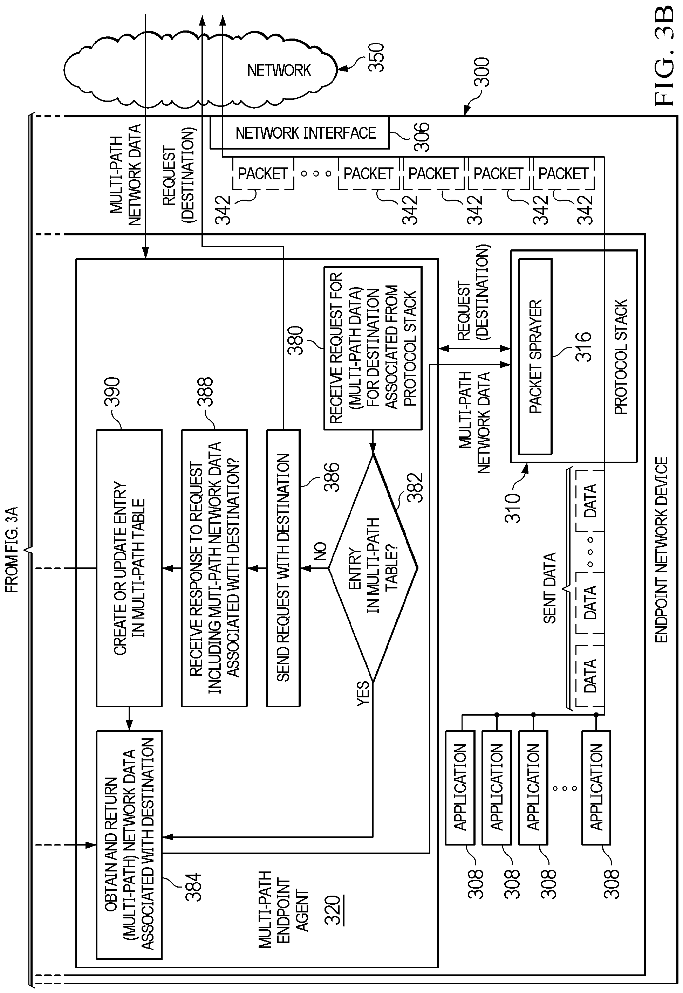

Turning now to FIGURE 3, one embodiment of a corresponding endpoint including a multi-path agent for enabling packet-spraying protocols to access network data about available paths is depicted. Endpoint network device 300 may include a processor, storage (e.g., volatile or non-volatile memory), and one or more interfaces 306 to network 350. These network interfaces 306 can, for example, be implemented utilizing a Network Interface Card (NIC) or the like.

One or more applications 308 may be executing on endpoint device 300. These applications 308 may send data to destinations on network 350 using network interfaces 306. In particular, this data may be sent using one or more protocols. These protocols may be implemented by a protocol stack 310 at the endpoint device 300. For example, this protocol stack 304 may be implemented in whole, or in part, on (or by) the network interface 306 (e.g., NIC) or an operating system or the like on the endpoint device 300. The data sent by applications 308 is thus sent as packets 342 to a destination (e.g., the specified destination) on network 350.

The protocol implemented by the protocol stack 310 may be a packet spraying protocol (or packet spraying may be implemented in association with the protocol). Thus, packet sprayer 316 associated with protocol stack 310 may be adapted to place an entropy value into packets 342 to be sent according to the protocol. These entropy values may include one or more entropy values placed in one or more different fields in a packet 342. Each of these entropy values may, for example, correspond with a layer of network 350 such that load balancing may be implemented with respect to each of those one or more layers.

In one embodiment, packet sprayer 316 may be adapted to determine or select an entropy value for inclusion in a packet 342 to be sent to a destination based on (multi-path) network data associated with that destination. Accordingly, embodiments of endpoint device 300 may include multi-path endpoint agent 320 for obtaining, maintaining or providing such (multi-path) network data. This multi-path endpoint agent 320 may be implemented on, or as part of, the protocol stack 310 or may be otherwise accessible by protocol stack 310 or layers thereof. For example, multi-path endpoint agent 320 may reside, for example, at the network layer at endpoint device 300 and may be implemented in the operating system of the endpoint device 300 or implemented on, or by, network interface 306 of endpoint device 300.

Multi-path endpoint agent 320 may maintain multi-path table 330 comprising entries 340 comprising a destination 334 (e.g., an identifier for a destination) for traffic from that endpoint device 300 and associated (multi-path) network data 336 associated with paths from that endpoint device 300 to the destination 332, such as a number of paths or entropy values to use, identifiers of next hops, subgroups associated with the destination, entropy values to use, etc. Packet sprayer 316 associated with protocol stack 310 may access this multi-path endpoint agent 320 to determine network data 336 associated with a destination when determining an entropy value to place into packets 342 to be sent to a destination.

In particular, packet sprayer 316 of multi-path endpoint agent 320 may request network data associated with a destination (e.g., IP address or subnet including an IP address and a prefix) from multi-path endpoint agent 320. Multi-path endpoint agent 320 can thus receive such a request for (multi-path) network data associated with a destination (STEP 380). Multi-path endpoint agent 320 may determine if muti-path table 330 includes an entry 340 associated with that destination (STEP 382). This determination may include determining if there is an entry 340 in multi-path table 330 corresponding exactly to the specific destination or if there is an entry 340 in muti-path table 330 associated with a group of destinations (e.g., subnet) including the specific destination.

If there is an entry 340 in muti-path table 330 associated with the destination (Y Branch of STEP 382), (multi-path) network data 336 of that entry 340 may be obtained and provided to packet sprayer 316 of protocol stack 310 (STEP 384). The provided network data may include a number of paths for that destination, a number of entropy values to use for packet spraying for that destination, a type of entropy value to be utilized for packet spraying for that destination, the actual (e.g., entropy) values to use for packet spraying for that destination, the paths (e.g., next hops) to be used for that destination (where the paths may be actually associated with specific entropy values), whether the destination is connected to the same network device as the endpoint device 300, or other network data. Based on this (multi-path) network data, packet sprayer 316 associated with protocol stack 310 may determine one or more suitable entropy values to include in packets 342 for that destination. These entropy values can be determined, for example, by providing the network data (or portion thereof) to a transport protocol portion of protocol stack 310 to allow the transport protocol to determine such entropy values to be included in packets 342 for that destination.

If, however, there is no entry 340 in muti-path table 330 associated with that destination (N Branch of STEP 382) the multi-path endpoint agent 320 may request network data associated with that destination from a network aware network device (STEP 386). The destination specified in such a request may be an individual destination (e.g., a single IP address) or a group of destinations (e.g., a subnet such as an IP address and prefix or the like).

When the network data (e.g., including the number of paths or number of entropy values to utilize with the destination) is received at the multi-path endpoint agent 320 (STEP 388), the multi-path endpoint agent 320 may register an entry 340 in the multi-path table 330 associated with the destination where the entry in the muti-path table 330 includes the network data as provided from the network aware network device (e.g., may include specified number of paths or entropy values returned and any other returned network data) (STEP 390). The network data for the destination can then be provided to the packet sprayer 316 (e.g., at that point or at a later point when packets associated with that destination are once again being sent using protocol stack 310) to allow packet sprayer 316 associated with protocol stack 310 to determine one or more suitable entropy values to include in packets 342 for that destination.

Generally then, specific embodiments have been described. However, one of ordinary skill in the art appreciates that various modifications and changes can be made without departing from the scope of the invention. Accordingly, the disclosure is to be regarded in an illustrative rather than a restrictive sense, and all such modifications are intended to be included within the scope of invention.

Although embodiments have been described with respect to specific embodiments thereof, these embodiments are merely illustrative, and not restrictive of the invention. The description herein of illustrated embodiments of the invention is not intended to be exhaustive or to limit the invention to the precise forms disclosed herein (and in particular, the inclusion of any particular embodiment, feature or function is not intended to limit the scope of the invention to such an embodiment, feature, or function). Rather, the description is intended to describe illustrative embodiments, features, and functions in order to provide a person of ordinary skill in the art context to understand the invention without limiting the invention to any particularly described embodiment, feature or function. While specific embodiments of, and examples for, the invention are described herein for illustrative purposes only, various equivalent modifications are possible within the spirit and scope of the invention, as those skilled in the relevant art will recognize and appreciate. As indicated, these modifications may be made to the invention in light of the foregoing description of illustrated embodiments of the invention and are to be included within the spirit and scope of the invention.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component.

The disclosure in the application also includes the following numbered clauses:
1. A system, comprising:
   a network aware network device in a network, comprising:
   a first processor; and
   a first non-transitory computer readable medium comprising first instructions for:
      determining a number of paths in the network associated with an endpoint network device and a destination in the network; and
      providing network data to the endpoint network device, wherein the network data includes the determined number of paths or a number of entropy values determined based on the determined number of paths.
2. The system of clause 1, further comprising registering the endpoint network device in association with the destination and network data in a first multi-path table at the network aware network device.
3. The system of clause 2, wherein the network data is provided in response to a request specifying the destination received from the endpoint network device.
4. The system of clause 3, wherein the destination comprises an Internet Protocol address.
5. The system of clause 4, wherein the network data comprises a subnet associated with the destination.
6. The system of any of clauses 2 to 5, wherein the network data is provided in response to a determination, by the network aware network device, that the endpoint network device is associated with the destination.
7. The system of clause 6, wherein the determination that the endpoint network device is associated with the destination is made based on analysis of traffic at the network aware network device.
8. The system of any of clauses 1 to 7, wherein the network data includes values for each of the number of entropy values.
9. The system of clause 8, wherein the values for each of the number of entropy values are determined based on a forwarding algorithm.
10. The system of clause 8 or clause 9, wherein the values for each of the number of entropy values is determined based on a number of next hops or a number of paths associated with a layer of the network associated with that entropy value.
11. The system of clause 10, wherein the first instructions are further for configuring a data plane of the network aware network device to send packets including different values of each of the entropy values on a different path to the destination.
12. The system of any of clauses 8 to 11, wherein each of the values comprises one or more sub-fields.
13. The system of clause 12, wherein each of the sub-fields corresponds to a forwarding decision at network devices in the network.
14. The system of any of clauses 1 to 13, wherein the network data includes a type of entropy value.
15. The system of any of clauses 1 to 14, wherein determining the number of paths includes determining that the endpoint network device and the destination are directly connected and the network data includes an indication that the endpoint network device and the destination are directly connected.
16. The system of any of clauses 1 to 15, wherein the number of paths comprises a number of local next hops or the number of paths in the entirety of the network.
17. The system of clause 16, wherein the network data is associated with a single path or single next hop.
18. The system of clause 2 or any of clauses 3 to 17 when dependent upon clause 2, further comprising:
   the endpoint network device in the network, the endpoint network device comprising:
   a second processor; and
   a second non-transitory computer readable medium, comprising second instructions for:
      receiving the network data associated with the destination at the endpoint network device;
      registering the destination and the network data in a second multi-path table at the endpoint network device;
      determining a packet to be sent to the destination;
      accessing the second multi-path table based on the destination to obtain the network data; and
      determining a first entropy value to include in the packet based on the network data associated with the destination in the second multi-path table.
19. The system of clause 18, wherein determining the first entropy value to include in the packet comprises providing at least a portion of the network data to a transport protocol at the endpoint network device, wherein the transport protocol determines the first entropy value.
20. The system of clause 18 or claim 19, wherein the first entropy value is one of a set of entropy values, each of the set of entropy values associated with a layer of the network.
21. The system of clause 19 or clause 20, wherein the set of entropy values is included in a field in the packet.
22. The system of any of clauses 18 to 21, wherein the first instructions further comprise instructions for:
   determining, at the network aware network device, that a path associated with the destination has changed;
   accessing the first muti-path table at the network aware network device to determine that the destination is associated with the endpoint network device;
   determining updated network data associated with the endpoint network device and the destination based on the changed path, where the updated network data includes an updated number of paths or an updated number of entropy values;
   sending a notification to the endpoint network device, the notification specifying the destination and including the updated network data; and
   registering the updated network data in association with the endpoint network device and destination in the first multi-path table at the network aware network device
23. The system of clause 22, wherein the second instructions further comprises instruction for:
   receiving, at the endpoint network device, the notification specifying the destination and including the updated network data;
   registering the updated network data in the second multi-path table at the endpoint device in association with the destination;
   determining a second packet is to be sent to the destination;
   accessing the second multi-path table based on the destination to obtain the updated network data; and
   determining a second entropy value to include in the second packet based on the updated network data associated with the destination in the second multi-path table.
24. A method, comprising:
   determining a destination associated with an endpoint network device on a network;
   determining a number of paths in the network associated with an endpoint network device and a destination in the network; and
   providing, from a network aware network device, network data to the endpoint network device, wherein the network data includes the determined number of paths or a number of entropy values determined based on the determined number of paths.
25. The method of clause 24, further comprising:
   receiving, from the network aware network device, the network data associated with the destination at the endpoint network device;
   determining a packet to be sent to the destination; and
   determining, at the endpoint network device, an entropy value to include in the packet based on the network data associated with the destination.
26. The method of clause 25, wherein the network data is provided from the network aware network device in response to a request received from the endpoint network device.
27. The method of clause 25 or clause 26, wherein the network data is provided in response to an analysis of network traffic at the network aware network device.
28. A system, comprising:
   a network aware network device adapted for:
   determining a number of paths in a network associated with an endpoint network device and a destination in the network; and
   providing network data to the endpoint network device, wherein the network data includes the determined number of paths or a number of entropy values determined based on the determined number of paths, wherein the endpoint device in the network is adapted for:
      receiving the network data at the endpoint device in response to the request specifying the destination;
      determining a packet to be sent to the destination;
   accessing the received network data; and
   determining an entropy value to include in the packet based on the network data associated with the destination.
29. The system of clause 28, wherein the network data comprises a list of entropy values.

## Claims

1. A system, comprising:
a network aware network device in a network, comprising:
a first processor; and
a first non-transitory computer readable medium comprising first instructions for:
determining a number of paths in the network associated with an endpoint network device and a destination in the network; and
providing network data to the endpoint network device, wherein the network data includes the determined number of paths or a number of entropy values determined based on the determined number of paths.

2. The system of claim 1, further comprising registering the endpoint network device in association with the destination and network data in a first multi-path table at the network aware network device.

3. The system of claim 2, wherein the network data is provided in response to a request specifying the destination received from the endpoint network device.

4. The system of claim 2 or claim 3, wherein the network data is provided in response to a determination, by the network aware network device, that the endpoint network device is associated with the destination.

5. The system of claim 4, wherein the determination that the endpoint network device is associated with the destination is made based on analysis of traffic at the network aware network device.

6. The system of any preceding claim, wherein the network data includes values for each of the number of entropy values.

7. The system of claim 6, wherein the values for each of the number of entropy values are determined based on a forwarding algorithm.

8. The system of claim 6 or claim 7, wherein the values for each of the number of entropy values is determined based on a number of next hops or a number of paths associated with a layer of the network associated with that entropy value.

9. The system of any of claims 6 to 8, wherein each of the values comprises one or more sub-fields.

10. The system of claim 9, wherein each of the sub-fields corresponds to a forwarding decision at network devices in the network.

11. The system of any preceding claim, wherein determining the number of paths includes determining that the endpoint network device and the destination are directly connected and the network data includes an indication that the endpoint network device and the destination are directly connected.

12. The system of claim 2 or any preceding claim when dependent upon claim 2, further comprising:
the endpoint network device in the network, the endpoint network device comprising:
a second processor; and
a second non-transitory computer readable medium, comprising second instructions for:
receiving the network data associated with the destination at the endpoint network device;
registering the destination and the network data in a second multi-path table at the endpoint network device;
determining a packet to be sent to the destination;
accessing the second multi-path table based on the destination to obtain the network data; and
determining a first entropy value to include in the packet based on the network data associated with the destination in the second multi-path table.

13. The system of claim 12, wherein the first instructions further comprise instructions for:
determining, at the network aware network device, that a path associated with the destination has changed;
accessing the first muti-path table at the network aware network device to determine that the destination is associated with the endpoint network device;
determining updated network data associated with the endpoint network device and the destination based on the changed path, where the updated network data includes an updated number of paths or an updated number of entropy values;
sending a notification to the endpoint network device, the notification specifying the destination and including the updated network data; and
registering the updated network data in association with the endpoint network device and destination in the first multi-path table at the network aware network device

14. The system of claim 13, wherein the second instructions further comprises instruction for:
receiving, at the endpoint network device, the notification specifying the destination and including the updated network data;
registering the updated network data in the second multi-path table at the endpoint device in association with the destination;
determining a second packet is to be sent to the destination;
accessing the second multi-path table based on the destination to obtain the updated network data; and
determining a second entropy value to include in the second packet based on the updated network data associated with the destination in the second multi-path table.

15. A method, comprising:
determining a destination associated with an endpoint network device on a network;
determining a number of paths in the network associated with an endpoint network device and a destination in the network; and
providing, from a network aware network device, network data to the endpoint network device, wherein the network data includes the determined number of paths or a number of entropy values determined based on the determined number of paths.
